# EUROPEAN PATENT APPLICATION

(11) **EP 2 058 524 A1**
(43) Date of publication of application: **13.05.2009**
(21) Application number: 07021944.9
(22) Date of filing: 12.11.2007
(51) Int. Cl.: F04D 27/02, F01D 17/10

(54) **Air bleed compressor with variable guide vanes**

(71) Applicant: SIEMENS AKTIENGESELLSCHAFT, 80333 München (DE)
(72) Inventor: Twell, Philip, Lincoln LN2 3JN (GB)

(57) **Abstract**

Disclosed is a guide vane (2) for a compressor (1) with an airfoil (7), and a base plate (8) for mounting the guide vane (2) to a compressor casing, wherein the base plate (8) includes an air duct (9) sized and configured to guide compressor air off the airfoil (7) through the air duct (9). Further disclosed is a guide vane arrangement (17).

## Description

### Field of the Invention

The invention relates to an air bleed in a compressor with variable guide vanes and a guide vane arrangement.

### BACKGROUND OF THE INVENTION

In a conventional gas turbine engine a compressor is used for pressurising ambient air which is mixed with fuel in a combustor, ignited and burned. Energy is extracted from the hot combustion gas by passing it through a turbine. The rotatable sections of an engine typically comprise annular arrays of compressor or turbine rotor blades, the blades normally being intersected with annular arrays of static aerodynamic guide vanes (also called stator vanes). Each set of rotor blades and guide vanes is referred to as a stage. The guide vanes ensure the gas impinges on the rotor at the correct angle.

The first stages of a compressor may be equipped with variable guide vanes that are pivotable about spindles to adapt the stagger during operation of the compressor. The guide vanes are connected to a lever which is pivotably attached to a unison actuator ring mounted around the periphery of the compressor casing. By moving the unison actuator ring the stagger of the guide vanes is altered.

During the start-up of an engine the position of a variable guide vane row is altered and the compressor intake is closed in such a way that the mass flow is restricted. The position of the variable guide vane row is dynamically altered. Flow instabilities during the starting or accelerating of the compressor can be reduced and/or overcome.

In compressors with highly loaded stages (e.g. few stages for a given pressure ratio) it is practice to use several rows of variable guide vanes at the front end of the compressor. The vanes are gradually closed as the load is decreased.

Not all of the compressed air is used for combustion. A part of the air may be used in many other different ways, like deicing at the compressor entry, or turbine blade cooling. Therefore, compressed air is taken from within the engine, in or after the compressor stage(s), depending on the application, and before the fuel is injected in the burners. This compressed air is called bleed air.

In compressors, variable guide vanes may mechanically interfere with air bleeds arranged in the proximity of the variable guide vanes and the delivery requirements for bleed air are not met.

Furthermore, if air is bled through holes in the casing, outside the rotor blades a large sealed chamber incorporating the whole of the variable guide vane mechanism including the actuator has to be fitted onto the compressor casing. The temperature inside would be above the normal operating temperature of (at least) electric actuators. This chamber would also restrict access for inspection and maintenance of the guide vane mechanism.

US 7,131,815 B2 refers to the problem of ice formation on variable and static inlet guide vanes and describes a vane with a spindle; the spindle is configured to engage in operation with a support such that the vane pivots about the spindle. The vane is further provided with an electrically operable heater which is communicable with an electrical supply via an electrical connection node located in the spindle.

The patent application JP2002195196 shows a configuration with bleed holes between vanes in a cascade of a axial compressor.

In US2006/0182623 is disclosed a bleed arrangement based of angled holes outside the rotor blade tips of a compressor.

US6588195:
This patent describes a bleed valve exhausting into a bleed duct.

US7090462 shows an arrangement with an external bleed chamber connected to a slot downstream of a vane row.

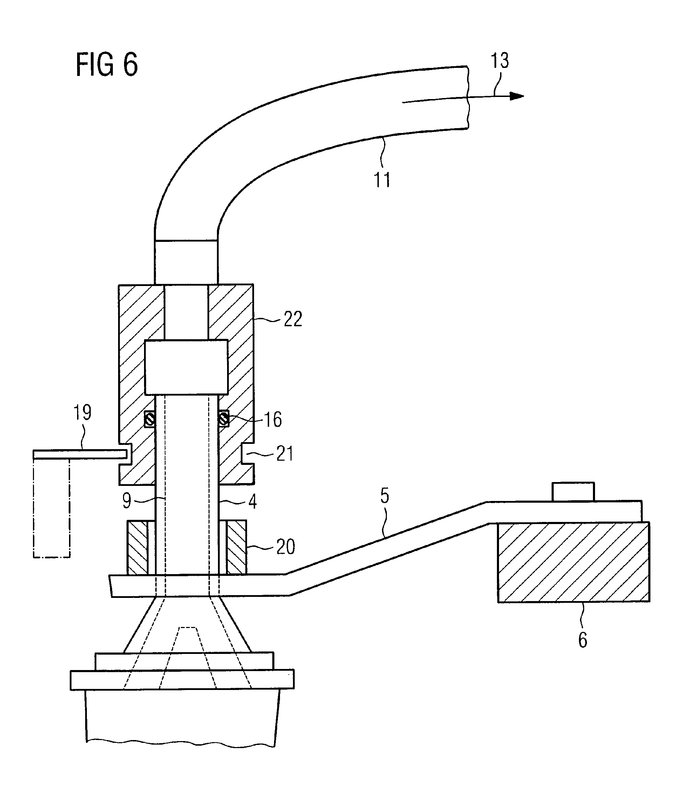

US5517817 describes a variable guide vane of a power turbine comprising a supply hole of air through the centre line of the vane. See figures 6-8.

In the US4861228 is shown a variable guide vane of a power turbine comprising a supply hole of air through the centre line of the vane.

In the US4834634 a sliding vane rotary compressor with a partial passage through the driveshaft is shown.

US4576547 shows an air passage through a fixed vane in a compressor.

### SUMMARY OF THE INVENTION

It is an objective of the invention to provide an improved guide vane and an improved guide vane arrangement with an air bleed not being mechanically interfered by the variable guide vane as a function of the stagger of the variable guide vane.

This objective is achieved by the claims. The dependent claims describe advantageous developments and modifications of the invention.

An inventive guide vane for a compressor comprises an airfoil and a base plate for mounting the guide vane to a compressor casing. The base plate includes an air duct appropriate for bleeding air, i.e. to guide air from the compressor flow path through the air duct.

It is preferable that the inventive guide vane comprises a spindle connected to the base plate and facing away from the airfoil to allow the vane to pivot about the spindle. It is furthermore preferable that the air duct extends from the base plate through the spindle.

It is advantageous to have at least one inlet opening of the air duct arranged in the base plate of the guide vane.

For an intermittent flow, it is preferable to have only one inlet opening arranged in the base plate as the pressure difference between the aerofoil pressure and suction surfaces may cause recirculation through the passageway between the two surfaces.

For continuous flow, it is advantageous, when the air duct comprises one or more inlet openings arranged in the base plate, the inlet openings being arranged on opposite sides of the airfoil. The risk of having air flowing from the pressure side to the suction side when using bleed holes on both sides of the aerofoil which are in communication can be avoided by using a restrictor in the whole located on the high-pressure side or simply by differential inlet opening sizes.

It is advantageous to combine at least two inventive guide vanes to build a guide vane arrangement for an axial flow compressor.

Preferably, the guide vanes are circumferentially arranged about a longitudinal axis of the compressor and extend radially. The spindles of the guide vanes allow for pivotably mounting the guide vanes for rotation about their longitudinal axis in a stator structure of the axial flow compressor, the stator structure being surrounded by an actuator ring. Levers, circumferentially arranged about the longitudinal axis of the compressor, extend from the actuator ring to respective spindles of guide vanes.

It is particularly advantageous to gather the thereby obtained bleed air with an air duct extension connected to the spindle ends of the at least two guide vanes and to guide the bleed air to a bleed manifold.

For variable guide vanes with only small movements the air duct extension preferably is a flexible hose arranged at a radially outer end of the spindle. The flexible hose easily copes with small torsions and can be connected directly to a bleed manifold or air ducting.

For variable guide vanes with larger movements a more elaborate air duct extension is necessary.

It could be advantageous to impose a hose adaptor on the end of the spindle to connect the hose to the spindle. It is therefore advantageous to have a flatted recess arranged in the outer surface of the hose adaptor to allow for retaining the hose adaptor by a simple yoke attached to the casing in its position, i.e. to keep the hose adaptor from rotating or slipping off the spindle.

To prevent air loss off the air duct while still allowing for a rotational movement of the spindle it is preferable to have a seal arranged between the spindle and the hose adaptor.

For large movements of the guide vane another advantageous alternative is to use a combined vane drive lever and duct, to transport the bleed air from the spindle to a bleed manifold which could be a hollow actuator ring. To pipeline the bleed air from the spindle to the lever and from the lever to the bleed manifold hollow articulated joints can be used allowing for free rotation of the variable guide vane spindle in the lever and free rotation of the lever at the actuator ring connection.

Here, it is advantageous when the spindle extends through a first end of the lever.

It is also advantageous when the flow communication between the spindle and the lever is established through at least one opening in the spindle.

Preferably, seals arranged between the spindle and the lever allow for a rotational movement of the spindle while preventing air loss off the cavity.

It is advantageous to use the inventive guide vane arrangement as variable inlet guide vane arrangement in a gas turbine engine compressor.

By extracting the air from the gas path through the spindle of the variable guide vane and ducting the air to an external manifold the bleed can be located anywhere among the rows of variable guide vanes.

Compared to conventional guide vane arrangements only a few new components are required, such as cavities in the guide vane spindle, arm/lever and actuator ring, which in turn can be connected to air ducting in the or adjacent to the skid through a flexible hose.

Air with the right pressure and temperature for the application can be obtained without any preparations saving cost and increasing performance of the gas turbine.

The cavities in the vanes could also be used for borescope/fibrescope access to inspect adjacent rotor blades, injection of fluids for cleaning or of corrosion inhibitors for long term storage.

### BRIEF DESCRIPTION OF THE DRAWINGS

The invention will now be further described with reference to the accompanying drawings in which:
- Figure 1: is a cross-sectional view of a conventional gas turbine compressor with variable guide vanes,
- Figure 2: schematically shows a variable guide vane,
- Figure 3: is a view in the direction of arrows III of Figure 2 showing two inlet openings of the air duct arranged in the base plate of the variable guide vane,
- Figure 4: represents a side view of an inventive guide vane arrangement for small movements
- Figure 5: represents a side view of an inventive guide vane arrangement for large movements and
- Figure 6: represents a side view of another inventive guide vane arrangement for large movements.

In the drawings like references identify like or equivalent parts.

### DETAILED DESCRIPTION OF THE INVENTION

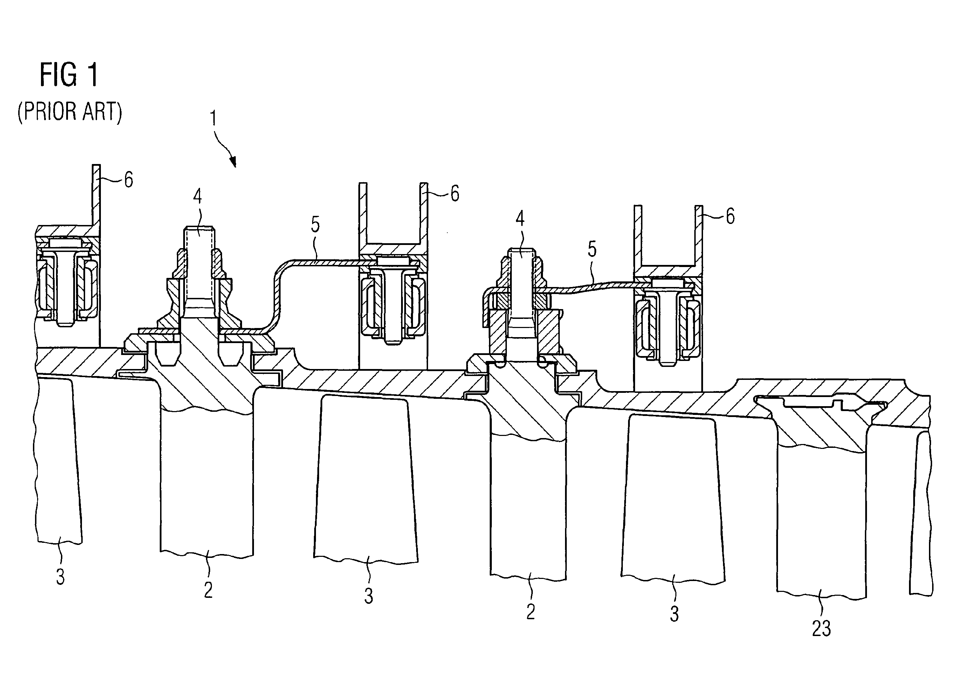

Illustrated in Figure 1 and known in the art, the compressor 1 of a gas turbine engine includes alternating rows of stationary guide vanes 2,23 and moving rotor blades 3. Figure 1 shows two different types of guide vanes, variable 2 and fixed 23 ones. Both may be attached to an inner portion of a stator structure (not shown), but more likely, the variable guide vanes 2 have a free end at the inner portion whereas the fixed vanes 23 are attached. It is also known to have all guide vanes 2,23 attached only to the outer portion of the stator and use a free end at the inner portion of the stator. Fixed guide vanes 23, attached at both ends, are often referred to as shrouded vanes whereas guide vanes 2,23 with a free end are referred to as unshrouded or cantilever vanes. The guide vanes 2,23, are secured to the stator by nuts attached to the spindles 4. The rotor blades 3 are connected to disks that form a portion of the rotor (not shown). The rotor extends from the compressor 1 and into the turbine. The stationary guide vanes 2 are pivotable about spindles 4 that are elongated portions of the compressor guide vane 2 extending in a radial direction towards the outside of the compressor casing when assembled, to adapt the stagger during operation of the compressor 1. The guide vanes 2 are connected to a lever 5 which is pivotably attached to an actuator ring 6 mounted around the periphery of the compressor casing. By moving the actuator ring 6 the stagger of the guide vanes 2 is altered.

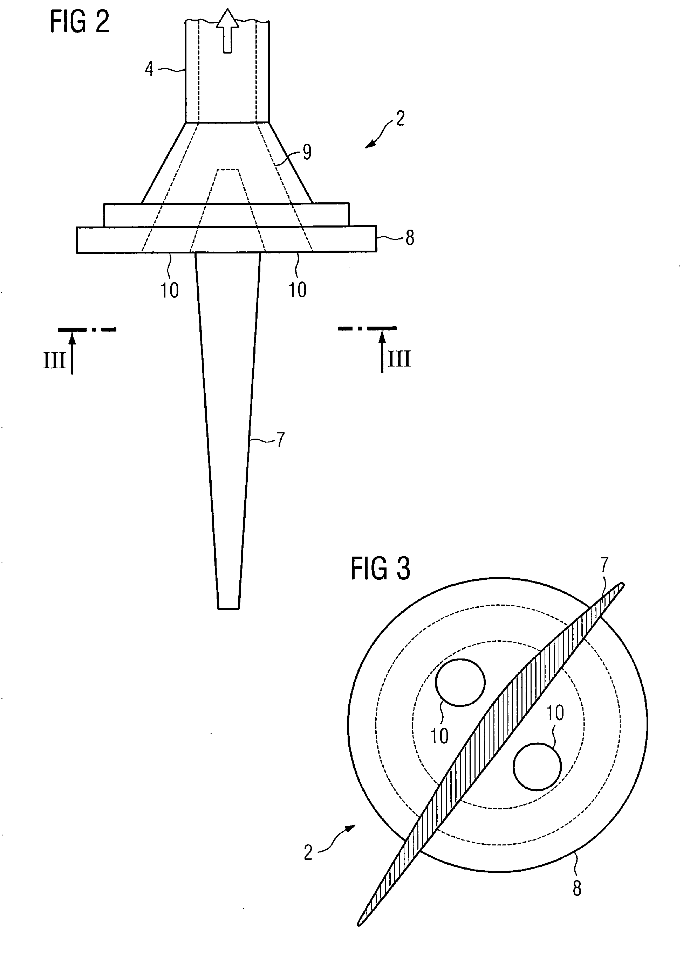

Figure 2 shows details of a cantilever variant of the inventive guide vane 2. The guide vane 2 comprises an airfoil 7, a base plate 8 for mounting the airfoil 7 to a compressor casing and a spindle 4, arranged on the side of the base plate 8 facing away from the airfoil 7 and about which the guide vane 2 is pivotable. The base plate 8 includes an air duct 9 extending from the airfoil-side of the base plate 8 through the spindle 4. The air duct 9 is sized and configured to guide part of the compressor air off the airfoil 7 through the air duct 9. Airfoil-sided, the air duct 9 in the base plate 8 may have more than one inlet opening 10. The embodiment shown in Figure 2 has openings arranged in the base plate 8 on opposite sides of the airfoil 7. The air duct 9, branched in the base plate 8 is merged to a single air duct 9 in the spindle 4.

With reference to Figure 3, a view in the direction of arrows III in Figure 2 of a preferred embodiment of the inventive variable guide vane 2 is shown. In the base plate 8 of the variable guide vane 2 and on opposite sides of the airfoil 7, two inlet openings 10 of the air duct 9 are arranged.

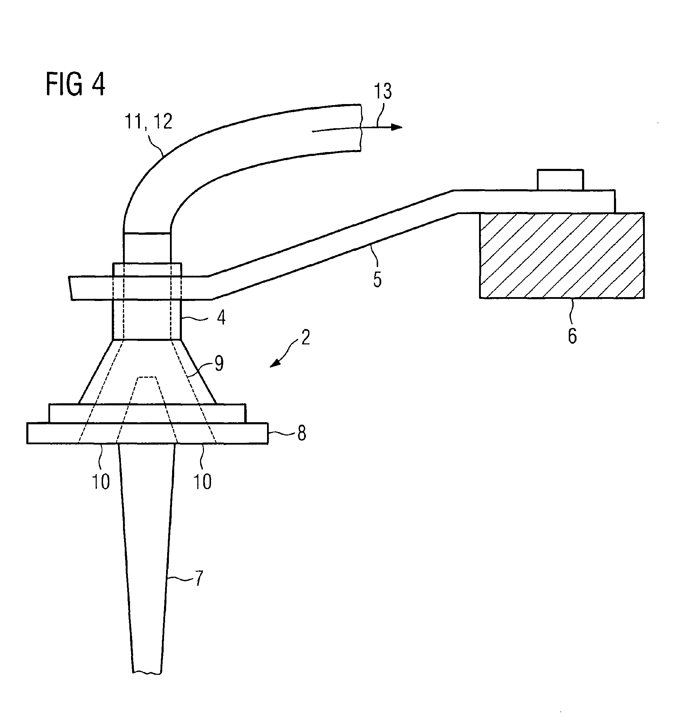

Figure 4 represents a preferred embodiment of the inventive variable guide vane arrangement 17 for small movements with the guide vane 2 comprising an airfoil 7, a base plate 8 and a spindle 4. The branched air duct 9 with inlet openings 10 in the base plate 8 on opposite sides of the airfoil 7 is merged to a common air duct 9 through the spindle 4.

A lever 5 connects the spindle 4 of the guide vane 2 to an actuator ring 6. Movements of the actuator ring 6 alter the stagger of the guide vanes 2. The compressor casing / outer portion of the stator structure is not shown.

A flexible conduit, i.e. a hose 11, is arranged as air duct extension 12 at one end of the spindle 4 of the inventive guide vane 2. The hose 11 connects the spindle 4 to a bleed manifold 13 or an air ducting and is most suitable for guide vane applications with small movements of the guide vane 2.

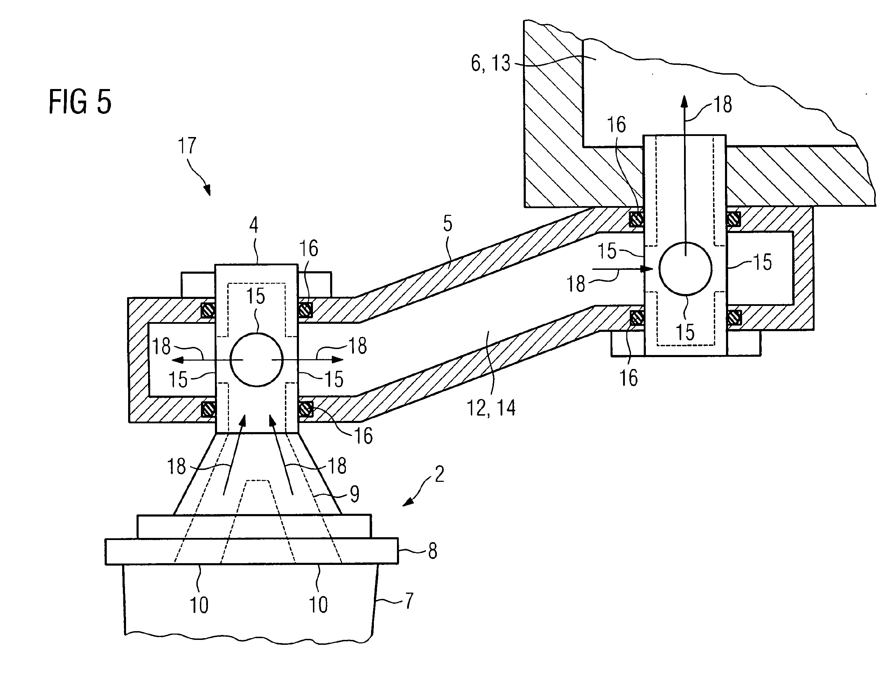

The alternative embodiment shown in Figure 5 is most suitable for guide vanes 2 with large movements. Figure 5 shows the guide vane 2 comprising an airfoil 7, a base plate 8 and a spindle 4. Again, as in Figure 4, the branched air duct 9 with inlet openings 10 in the base plate 8 on opposite sides of the airfoil 7 is merged to a common air duct 9 through the spindle 4. A lever 5 connects the spindle 4 of the guide vane 2 to an actuator ring 6. The compressor casing / outer portion of the stator structure is not shown.

Unlike in the previous embodiment, the air duct 9 of the guide vane 2 in Figure 5 is in flow communication with an air duct extension 12 arranged as cavity 14 in the lever 5 which in turn is in flow communication with a combined actuator ring 6 and bleed manifold 13. The spindle 4 extends through the end of the lever 5 facing away from the actuator ring 6. The flow communication between the spindle 4 and the lever 5 is established through radial openings 15 in the spindle 4 where the spindle 4 extends through the lever 5. Seals 16 are arranged radially between the spindle 4 and the lever 5 to allow for rotational drive of the spindle 4. The seal 16 is ring-shaped and is implemented as a radial seal. Since the guide vane spindle 4 is the smoothest surface finished component within the assembly the spindle 4 will be the dynamic seal face and the lever 5 will be used as the static seal face.

A similar sealing arrangement is found for the connection between the lever 5 and the actuator ring 6 to establish flow communication between the cavity 14 in the lever 5 and the bleed manifold 13 in the actuator ring 6, allowing for a rotational movement of the lever 5 at the actuator ring connection while preventing air loss off the cavity 14. Arrows show the way of the bleed air 18 through the guide vane arrangement 17.

Figure 6 shows an embodiment that would preferably be used when only some of the vanes with large movements are used to extract air. The guide vane 2 is fixed with a retention nut 20 to the lever 5. A hose adaptor 22 is imposed on the end of the spindle 4 to connect the hose 11 to the spindle 4. A flatted recess 21 arranged in the outer surface of the hose adaptor 22 allows for retaining the hose adaptor 22 by a simple yoke 19 attached to the casing in its position, i.e. it keeps the hose adaptor 22 from rotating or slipping off the spindle 4. A seal 16 is arranged between the spindle 4 and the hose adaptor 22 to allow for a rotational movement of the spindle 4 while preventing air loss off the air duct 9. The hose adaptor 22 could be a 'slip on' aramid bearing grade plastic connector or any other adapted commercial quick release connector by adding an anti-rotation device.

## Claims

1. A guide vane (2) for a compressor (1), comprising:
an airfoil (7), and
a base plate 8 for mounting the guide vane (2) to a compressor casing, wherein the base plate (8) includes an air duct (9) sized and configured to guide compressor air off the airfoil (7) through the air duct (9).

2. The guide vane (2) as claimed in claim 1, further comprising a spindle (4) connected to the base plate (8) and facing away from the airfoil (7), the air duct (9) extending from the base plate (8) through the spindle (4).

3. The guide vane (2) as claimed in claim 2, wherein the guide vane (2) is a variable guide vane (2), pivotable about the spindle (4).

4. The guide vane (2) as claimed in any of the preceding claims, wherein the air duct (9) has at least one inlet opening (10) arranged in the base plate (8).

5. The guide vane (2) as claimed in any of the preceding claims, wherein the air duct has at least two openings (10) arranged in the base plate (8) on opposite sides of the airfoil (7).

6. The guide vane (2) as claimed in claim 5, wherein the inlet openings (10) have different inlet opening sizes.

7. A guide vane arrangement (17) for an axial flow compressor (1), comprising:
at least two guide vanes (2) as claimed in claim 4, further comprising an air duct extension (12) connected to spindle ends of the at least two guide vanes (2) for guiding off and
gathering the compressor air of the at least two guide vanes (2).

8. The guide vane arrangement (17) as claimed in claim 7, wherein the air duct extension (12) terminates at a bleed manifold (13).

9. The guide vane arrangement (17) as claimed in claim 7 or 8, wherein the air duct extension (12) includes at least one flexible hose (11).

10. The guide vane arrangement (17) as claimed in any of claims 7 to 9, wherein a hose adaptor (22) is imposed on the end of the spindle (4) to connect the hose (11) to the spindle (4).

11. The guide vane arrangement (17) as claimed in any of claims 7 to 10, wherein a flatted recess (21) is arranged in the outer surface of the hose adaptor (22).

12. The guide vane arrangement (17) as claimed in any of claims 7 to 11, wherein a yoke (19) engages the flatted recess (21) to keep the hose adaptor (22) from rotating or slipping off the spindle (4).

13. The guide vane arrangement (17) as claimed in any of claims 7 to 12, wherein a seal (16) is arranged between the spindle (4) and the hose adaptor (22) to allow for a rotational movement of the spindle (4) while preventing air loss off the air duct (9).

14. The guide vane arrangement (17) as claimed in claim 7 or 8, wherein the air duct extension (12) includes a cavity (14) arranged in a lever (5).

15. The guide vane arrangement (17) as claimed in claim 8, wherein the bleed manifold (13) includes a cavity (14) in an actuator ring (6).

16. The guide vane arrangement (17) as claimed in claim 14, wherein the spindle (4) extends through a first end of the lever (5).

17. The guide vane arrangement (17) as claimed in claim 16, wherein a flow communication between the spindle (4) and the lever (5) is established through at least one opening (15) in the spindle (4).

18. The guide vane arrangement (17) as claimed in claim 17, further comprising a seal (16) arranged between the spindle (4) and the lever (5) to allow for a rotational movement of the spindle (4) while preventing air loss off the cavity (14).

19. The guide vane arrangement (17) as claimed in any of the claims 7 to 18, wherein the axial flow compressor (1) is a gas turbine engine compressor.

20. The guide vane arrangement (17) as claimed in any of the claims 7 to 19, wherein the guide vane arrangement (17) is a variable inlet guide vane arrangement (17) for a gas turbine engine compressor.
